# EUROPÄISCHE PATENTANMELDUNG

(11) **EP 2 223 729 A1**
(43) Veröffentlichungstag der Anmeldung: **01.09.2010**
(21) Anmeldenummer: 10161887.4
(22) Anmeldetag: 22.06.2004
(51) Int. Cl.: B01D 46/42, B01D 46/24

(54) **Filterelement, insbesondere zur Reinigung von Verbrennungsluft**

(30) Priorität: 18.07.2003 DE 10332988
(62) Teilanmeldung aus: 04102890.3
(71) Anmelder: MANN + HUMMEL GMBH, 71638 Ludwigsburg (DE)
(72) Erfinder: Dworatzek, Klemens, 68535, Edingen (DE); Ohm, Ralf, 74374, Zaberfeld (DE); Übelhör, Bertram, 71334, Waiblingen (DE)

(57) **Zusammenfassung**

Filterelement, insbesondere für die Reinigung von Verbrennungsluft für Brennkraftmaschinen, angeordnet in einem Filtergehäuse, bestehend aus einem Filtermedium, das wenigstens eine Stirnseite aufweist, an welcher ein Wulst angeordnet ist, der mit einer am Filtergehäuse angeordneten Dichtkontur kommuniziert, wobei die Endscheibe aus elastischem Kunststoff gebildet ist. In der Endscheibe ist ein Kennungselement angeordnet, welches vollständig von der Endscheibe überdeckt ist.

## Beschreibung

### Beschreibung

### Stand der Technik

Die Erfindung betrifft ein Filterelement, insbesondere für die Reinigung von Verbrennungsluft gemäss dem Oberbegriff des Hauptanspruches 1.

Aus der DE 199 44 344 ist ein Filterelement bekannt, welches folgende Merkmale aufweist: An dem hohlzylindrischen Filterelement ist an den jeweiligen Stirnscheiben eine Endscheibe angeordnet, welche aus einem elastischen Dichtmaterial besteht. An wenigstens einer der Endscheiben ist innenseitig eine Anschlussöffnung vorgesehen, welche mit einem im Filtergehäuse angeordneten Anschlussstutzen kommuniziert. Somit muss die Seite der Endscheibe, welche eine Anschlussöffnung aufweist, über den Anschlussstutzen geschoben werden, um eine dichtende Verbindung herzustellen. Hierdurch stellt sich die Aufgabe, an der elastischen Anschlussöffnung der Endscheibe eine radiale Spannung zu erzeugen, welche zu einem dichtenden Abschluss führt. Diese radiale Spannung wird dadurch erreicht, dass in der elastischen Endscheibe, welche eine Anschlussöffnung bildet, in radialem Abstand zum Innendurchmesser am äußeren Ende umfangseitig ein vorzugsweise aus Kunststoff gebildeter Ring angeordnet ist. Dadurch verringert sich der Innendurchmesser der Endscheibe in entspanntem Zustand auf ein geringeres Maß als der Außendurchmesser des Anschlussstutzens.

Der vorliegenden Erfindung stellt sich die Aufgabe, in Fortbildung des Standes der Technik ein Filterelement ohne äußerlich erkennbaren Hinweis jederzeit identifizierbar zu machen, wobei die Identifikation trotz der in Handhabung und Betrieb auftretenden mechanischen und thermischen Belastungen gewährleistet bleibt und wobei die Lösung wirtschaftlich herstellbar ist.

Diese Aufgabe wird durch die Merkmale des Patentanspruches 1 gelöst.

### Vorteile der Erfindung

Das erfindungsgemäße Filterelement für die Reinigung von Verbrennungsluft besteht aus einem Filtermedium, welches auf mindestens einer Stirnseite von einem Wulst aus elastischem Dichtmaterial umschlossen wird. Der Wulst umschließt den Randbereich des Filtermediums und kann bei hohlzylindrischen Filtermedien die Endscheibe bilden, und/ oder gleichzeitig einen Dichtwulst zur dichten Verbindung mit dem Filtergehäuse herstellen, wobei die korrespondierenden Dichtflächen radial und/ oder axial gebildet werden können. Als Filtermedien eignen sich beispielsweise Papiere, teil- oder vollsynthetische Materialien, oder Naturfasern, wobei die Filtermedien gefaltet, gewickelt oder geschichtet aufgebaut sein können. Bei zick-zack-förmig gefalteten Filtermedien kann der Wulst zum Verschluss der Falten des Filterelementes und durch seine Elastizität gleichzeitig zum Toleranzausgleich des eingebauten Filterelementes dienen. Silikonkautschuk oder PU-Schaum bilden beispielsweise geeignete Materialien zur Herstellung des Wulstes. Im Dichtwulst ist ein Kennungselement eingearbeitet, welches von außen nicht sichtbar ist und aus einem Material besteht, welches eine hohe Widerstandskraft gegen mechanische und thermische Belastung bei Montage und Betrieb aufweist.

Das Kennungselement kann z.B. in Form von mattenartigen Gewebefaserschichten aus z.B. Glasfasern, Kevlar oder allen Materialien gebildet sein, welche eine hohe thermische und mechanische Widerstandsfähigkeit aufweisen. Das Kennungselement kann dabei rund, rechteckig, scheibenförmig, streifenförmig, ringförmig, kubusförmig oder in allen denkbaren Geometrien ausgebildet sein. Es können auch mehrere gleichartige oder verschiedene Kennungselemente an unterschiedlichen Stellen innerhalb des Wulstes positioniert werden.

Durch die verdeckte Anordnung des Kennungselementes bietet sich die vorteilhafte Lösung, mit minimalem Materialaufwand eine Identifizierung des Filterelementes, auch nach extremen thermischen oder mechanischen Belastungen noch sicherzustellen. Insbesondere wird es ermöglicht, von Produktfälschern auf den Markt gebrachte, minderwertige Ersatzteile, so genannten Plagiate, von durch den Originalhersteller mit dem Kennungselement gekennzeichneten Ersatzteilen, zu unterscheiden. Dies ist besonders deshalb wichtig, da von minderwertigen, leicht entflammbaren Filtermedien die Gefahr eines Fahrzeugbrandes ausgehen kann.

In einer vorteilhaften Ausgestaltung der Erfindung ist das Filterelement hohlzylindrisch und weist zwei axial gegenüberliegende Stirnseiten auf, welche beide mit einem Filtergehäuse korrespondieren und wovon mindestens eine mit einer Öffnung versehen ist. Die Ringflächen beider Stirnseiten des Filtermediums sind zu verschließen, wobei dazu vorzugsweise ein elastisches Material verwendet wird, das gleichzeitig Dichtungs- und Toleranzausgleichsfunktionen erfüllt. Als Filtermedium kommt sowohl zick-zack-förmig gefaltetes Papier oder Vlies als auch ein Wickelfiltermedium zur Auswahl. An der zum hohlzylindrischen Raum hin geöffneten Stirnseite wird der Wulst vorzugsweise derart ausgestaltet, dass er einen ringförmigen Dichtwulst bildet, der den inneren Querschnitt den Hohlzylinders in axiale Richtung über die Stirnseite hinaus fortführt und dadurch eine Dichtfläche zu einem Rohrstutzen oder einer ringförmigen Planfläche des Filtergehäuses bildet. In einem hohlzylindrischen Filterelement wird es vorteilhaft ermöglicht, das Kennungselement an einer oder beiden Stirnseiten anzubringen und dabei ringförmige Kennungselemente zu verwenden.

Gemäß einer weiteren vorteilhaften Ausgestaltung der Erfindung ist das Filtermedium ein Flachfiltermedium, insbesondere ein zick-zack-förmig gefaltetes Flachfiltermedium, das vorzugsweise aus Papier oder Vliesstoff gebildet wird. Die seitlichen Enden der Falten werden üblicherweise durch eine Verklebung abgedichtet und auf einer Stirnseite oder am Umfang muss das Filtermedium von einem Wulst bzw. einem Dichtwulst umschlossen sein, welcher mit einer Dichtkontur des Filtergehäuses korrespondiert. Dazu wird in zweckmäßiger Weise ein elastisches Material wie z.B. Pu-Schaum verwendet. Entsprechend der Umfangsgeometrie des Wulstes, welche üblicherweise rechteckig ist, aber auch rund, oval oder polygon sein kann, ermöglicht sich die Gestaltung eines Kennungselementes, das der Umfangsgeometrie entsprechend einteilig aber auch mehrteilig ausgebildet sein kann. Das Kennungselement kann z.B. vor dem Aufspritzprozess des PU-Schaumes auf den Randbereich des Filtermediums aufgelegt werden, wodurch es nach dem Aufspritzen des PU-Schaumes umschlossen und von außen nicht erkennbar ist. Um eine sichere Positionierung des Kennungselementes zu erzielen, kann dieses in einem L-förmigen Querschnitt ausgebildet, das Filtermedium umschließen, wobei ein Schenkel der L-Form das Filtermedium überragt, wodurch eine formschlüssige Positionierung des Kennungselementes erreicht wird. Die Kennungselemente können auch alle bereits erwähnten Querschnitte und Formen aufweisen.

Das Kennungselement lässt sich vorteilhaft in ein Flachfilterelement integrieren und ermöglicht eine einfache, sichere und wirtschaftliche Identifizierungsmöglichkeit des Filterelementes.

Gemäß einer weiteren zweckmäßigen Ausgestaltung der Erfindung weist das Filterelement einen Stützkörper auf, der insbesondere bei runden Filtermedien eine Stabilisierung des gesamten Filterelementes bewirkt. Der Stützkörper erstreckt sich vorzugsweise über die gesamte axiale Länge des Filtermediums und weist zumindest an einer Stirnseite einen offenen Strömungsquerschnitt auf. Die Mantelfläche des Stützkörpers ist vorzugsweise gitterförmig gestaltet, und eine Stirnseite kann vollständig oder über einen Teilbereich verschlossen sein. Die dichte Verbindung zwischen Stützkörper und Filtermedium wird vorzugsweise durch den elastischen Wulst gebildet. Um eine gute Haftung des Wulstes an der Stirnseite zu ermöglichen kann eine verschlossene Stirnseite über einen ringförmigen Teilbereich gitterförmig gestaltet oder z.B. verrippt sein. An einer Flachfilterpatrone ist ein Stützkörper vorzugsweise kassettenförmig, das Filterelement an den Seitenflächen umschließend angeordnet und wird durch den elastischen Wulst mit dem Filtermedium dichtend verbunden. Der Stützkörper wird vorzugsweise aus einem Polymer, z.B. Polypropylen oder Polyamid, gebildet und führt zu einer vorteilhaften Stabilisierung des Filterelementes.

Eine weitere vorteilhafte Ausgestaltung der Erfindung ergibt sich durch die Fixierung des Kennungselementes durch bzw. am Stützkörper. Die im Vergleich zu PU-Schaum stabilen Materialien des Stützkörpers erlauben es, Konturen, z.B. Absätze, Nuten, Löcher oder Rippen, anzuordnen, welche korrespondierend zur Kontur eines Kennungselementes gestaltet sind. Bei hohlzylindrischen Filterelementen muss die Stirnseite nicht beidseitig mit einer Dichtkontur versehen sein, sondern kann auf einer Stirnseite durch eine angeformte Planscheibe über einen Teilbereich oder vollständig verschlossen werden. Bei dieser Ausgestaltung bietet sich die Möglichkeit, durch einen radialen Absatz auf der Planscheibe die Aufnahme für einen radialelastischen, metallischen Ring anzuformen. Die radiale Elastizität kann z.B. durch die Geometrie, durch die Materialwahl oder durch ein Schlitzen des Ringes erreicht werden. Dieser metallische Ring, welcher im entspannten Zustand einen geringeren Durchmesser aufweist als die angeformte Aufnahmekontur, kann durch seine eigene Spannung auf der Kontur fixiert werden und wird anschließend durch die Anbringung des elastischen Dichtmaterials überdeckt und endgültig auf dem Trägerkörper befestigt. Das aufgebrachte elastische Dichtmaterial umschließt somit den Trägerkörper, überdeckt das Kennungselement und umschließt das Filtermedium bis zu seiner äußeren Kante.

Dies ermöglicht eine vorteilhafte, prozesssichere Fixierung des Kennungselementes und verbessert die Wirtschaftlichkeit des Fertigungsprozesses.

In einer vorteilhaften Ausgestaltung des Erfindungsgedankens ist das Kennungselement aus metallischem Werkstoff gebildet. Elastische Kennungselemente wie Spangen, Klipse oder Federn eignen sich zur einfachen Fixierung mit korrespondierenden Konturen des Stützkörpers oder des Filtermediums. Metallische Kennungselemente können auch zu einer geforderten mechanischen Versteifung des Elementes beitragen. Wird das metallische Kennungselement der Umfangsform des Dichtwulstes angepasst, so wird auch noch die Dichtkontur der Endscheibe mechanisch stabilisiert und gewährleistet eine höhere Dichtheit.

Metallische Werkstoffe haben vorteilhaft hohe thermische und mechanische Eigenschaften und sind kostengünstig und einfach zu bearbeiten, wodurch sie ein wirtschaftlich vorteilhaftes Material als Widerstandselement aufweisen. Weitere Vorteile des metallischen Kennungselementes ergeben sich aus der Menge der zur Verfügung stehenden metallischen Massenartikeln, die als solche preisgünstig in vielen Formen verfügbar sind.

Gemäß einer weiteren vorteilhaften Ausgestaltung der Erfindung sind auf dem Kennungselement Kennzeichen des Herstellers angebracht, wobei diese eingeprägt, aufgedruckt, aufgelasert, aufgeschweißt, eingebrannt oder durch ein beliebiges aus dem Stand der Technik bekannten Verfahren aufgebracht sind. Vorteilhaft können dadurch zusätzlich zur reinen Form des Kennungselementes weitere Informationen fixiert werden.

Weiterhin bietet sich die vorteilhafte Möglichkeit, kryptologisch erstellte Daten, wie z.B. Fertigungsdatum, Herstellernummer, Auftragsnummer oder Chargennummer, auf dem Kennungselement zu hinterlegen. Die Daten können auch verschlüsselt oder als Barcode auf dem Kennungselement angebracht werden. Hierdurch wird es jederzeit ermöglicht, die Ursprungsdaten des Filterelementes festzustellen. Wird das Kennungselement unbeschriftet in das Filterelement eingebracht, so kann es auch durch seine bloße Form oder durch das Vorhandensein einen Hinweis auf den Hersteller geben.

Vorteilhaft bietet sich die Verwendung eines radialelastischen Kolbenringes als Metallring an. Der Kolbenring eignet sich insbesondere durch seine schmale Geometrie und sein leichtes Gewicht, weiterhin kann er aufgrund seiner Elastizität auf einen radialen Absatz aufgespannt oder eingespannt werden, und ist somit vor dem Anbringen eines Dichtwulstes oder einer korrespondierenden Kontur des Stützkörpers, z.B eines stirnseitigen radialen Absatzes, vorpositioniert. Aufgrund des hohen Bedarfes an Kolbenringen im Motorenbau werden diese günstig produziert und angeboten.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ausführungsbeispiele der Erfindung werden in der Zeichnung anhand von schematischen Darstellungen beschrieben. Hierbei zeigen
- Figur 1: ein Flachfilterelement im Vollschnitt,
- Figur 2: ein Flachfilterelement in der Draufsicht,
- Figur 3: ein Rundfilterelement im Vollschnitt.

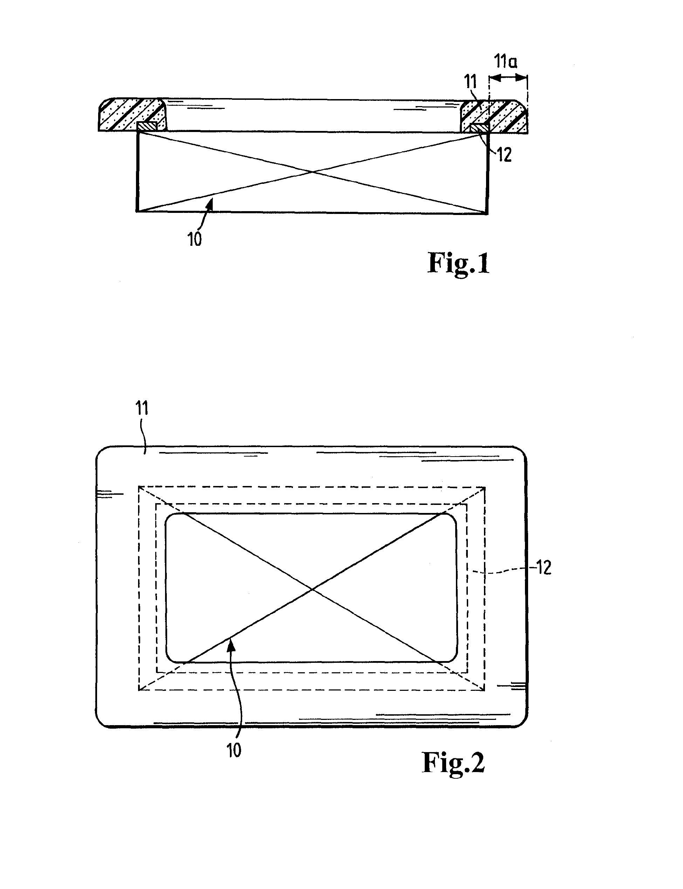

Die Figur 1 zeigt ein Filterelement, welches aus einem Filtermedium 10, einem das Filtermedium 10 stirnseitig umschließenden Dichtwulst 11 und einer im Dichtwulst 11 eingebetteten Metallscheibe 12 besteht. Die Metallscheibe 12 dient als Kennungselement zur Identifizierung des Filterelementes. Der Dichtwulst 11 kommuniziert mit einer Kontur an einem nicht dargestellten Filtergehäuse. Die Metallscheibe 12 grenzt an den Randbereich des Filtermediums 10 an und wird vom Dichtwulst 11 vollständig überdeckt. Der Teilbereich 11 a des Dichtwulstes 11, welcher das Filtermedium 10 seitlich überragt, dient als Klemmfläche zur Abdichtung des Filterelementes an das nicht dargestellte Filtergehäuse.

Figur 2 zeigt den Dichtwulst 11, der das Filterelement an den Längsseiten umschließt. Der Figur 1 entsprechende Bauteile sind mit den gleichen Bezugszeichen versehen. Das Filtermedium 10 ist ein zick-zack-förmig gefaltetes Medium, welches an den Seitenflächen dichtend verklebt ist. Die Metallscheibe 12 ist gestrichelt dargestellt und im umlaufenden Dichtwulst eingebettet.

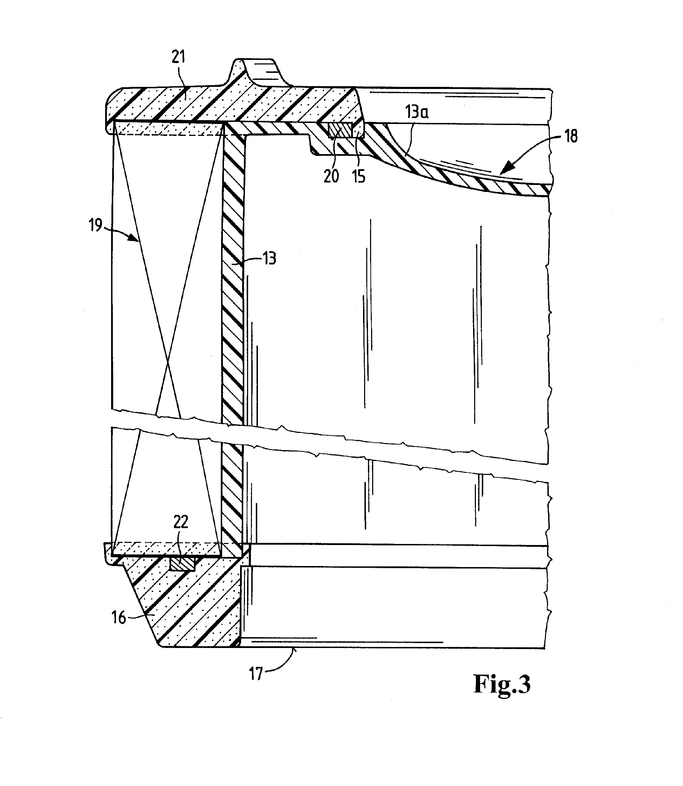

Figur 3 zeigt ein Rundfilterelement im Vollschnitt. Das Rundfilterelement besteht aus einem Trägerkörper 13, welcher umfangsseitig von einem hohlzylindrischen Rundfiltermedium 19 umschlossen ist. Stirnseitig ist der Trägerkörper 13 auf der unten dargestellten geöffneten Seite 17 offen und auf der oben dargestellten geschlossenen Seite 18 durch eine Planscheibe 13a über einen Teilbereich geschlossen. Die einstückig mit dem hohlzylindrischen Trägerkörper 13 hergestellte kreisförmige Planscheibe 13a ist durch Stege mit dem hohlzylindrischen Trägerkörper 13 verbunden. An der Planscheibe 13a ist außenseitig eine radiale Ringnut 15 vorhanden, welche zur Aufnahme des als Metallring 20 ausgebildeten Kennungselementes dient. Die stirnseitig geschlossene Seite 18 des Filterelementes, wird vom innenliegenden Teil der radialen Ringnut 15 bis zum außenliegenden Teil des Filtermediums 19 von dem kreisringförmigen Dichtwulst 21 überdeckt. Somit ist auch der Metallring 20 durch den Dichtwulst 21 mit dem Trägerkörper 13 fixiert. Die unten dargestellte geöffnete Seite 17 des Filterelementes wird von einem offenen Dichtwulst 16 von der Innenseite des Trägerkörpers 13 bis zur Außenseite des Filtermediums 19 stirnseitig ringförmig umschlossen. Dieser zweite Dichtwulst 16 kommuniziert mit einer Kontur eines nicht dargestellten Filtergehäuses. Das im offenen Dichtwulst 16 vorhandene Kennungselement 22 ist unabhängig vom Trägerkörper 13 nur durch das elastische Material des offenen Dichtwulstes 16 überdeckt und zeigt eine alternative Anordnung des Kennungselementes.

## Patentansprüche

1. Filterelement, insbesondere für die Reinigung von Verbrennungsluft für Brennkraftmaschinen, zur Verwendung in einem Filtergehäuse, aufweisend ein Filtermedium, das wenigstens eine Stirnseite aufweist, welche von einem Wulst umschlossen ist, welcher mit einer am Filtergehäuse angeordneten Dichtkontur kommuniziert, wobei der Wulst aus elastischem Kunststoff gebildet ist, **dadurch gekennzeichnet, dass** im Wulst ein Kennungselement angeordnet ist, welches vollständig vom Wulst überdeckt ist, wobei das Kennungselement aus metallischem Werkstoff gebildet ist.

2. Filterelement nach Anspruch 1, **dadurch gekennzeichnet, dass** das Filterelement ein holzylindrisches Filtermedium aufweist.

3. Filterelement nach einem der vorhergehenden Ansprüche, **dadurch gekennzeichnet, dass** das Filterelement ein flachförmiges Filtermedium aufweist.

4. Filterelement nach einem der vorhergehenden Ansprüche, **dadurch gekennzeichnet, dass** das Filterelement einen Stützkörper aufweist.

5. Filterelement nach Anspruch 4, **dadurch gekennzeichnet, dass** das Kennungselement am Stützkörper befestigt ist.

6. Filterelement nach einem der vorhergehenden Ansprüche, **dadurch gekennzeichnet, dass** das Filterelement durch am Kennungselement vorhandene Kennzeichen des Herstellers identifizierbar ist.

7. Filterelement nach einem der vorhergehenden Ansprüche, **dadurch gekennzeichnet, dass** die Kennzeichnung des Kennungselementes kryptologisch erstellte Daten aufweist.

8. Filterelement nach einem der vorhergehenden Ansprüche, **dadurch gekennzeichnet, dass** das Kennungselement ein radialelastischer Kolbenring ist.
